(19) **Europäisches Patentamt**

**European Patent Office**

**Office européen des brevets**

(11) **EP 1 510 974 A1**

(12) **EUROPEAN PATENT APPLICATION**
published in accordance with Art. 158(3) EPC

(43) Date of publication:
**02.03.2005 Bulletin 2005/09**

(51) Int Cl.7: **G06T 17/40**, G06T 15/00,
A61B 5/00, A61B 5/05,
A61B 6/03

(21) Application number: **03725690.6**

(22) Date of filing: **28.04.2003**

(86) International application number:
**PCT/JP2003/005427**

(87) International publication number:
**WO 2003/094117 (13.11.2003 Gazette 2003/46)**

(84) Designated Contracting States:
**DE NL**

(30) Priority: **30.04.2002 JP 2002128748**

(71) Applicant: **Japan Science and Technology
Agency
Kawaguchi-shi, Saitama 332-0012 (JP)**

(72) Inventor: **DOI, Akio
Morioka-shi, Iwate 020-0043 (JP)**

(74) Representative: **Reichel, Wolfgang, Dipl.-Ing. et al
Reichel und Reichel
Parkstrasse 13
60322 Frankfurt (DE)**

(54) **IMAGE DATA COMPRESSION METHOD AND IMAGE PROCESSING DEVICE**

(57) An image data compressing method for deleting an isosurface generated based on a three-dimensioned data includes: sequentially retrieving triangles in an ascending order of size for a generated isosurface; determining using a representative point of a triangle whether or not an error occurring in a case that the triangle is deleted is within tolerance; performing a processing of deleting the triangle and deleting or changing an adjacent related triangle when the error is within tolerance; and not deleting the triangle in a case that the error is beyond tolerance, thereby retrieving a next triangle and repeating a similar processing.

FIG. 2

## Description

Technical Field

This invention relates to an image data compressing method and an image processing apparatus, and more specifically to an image data compressing method and an image processing apparatus for obtaining triangular polygon (isosurface) to indicate a correct three-dimensional image with an amount of reduced data from three-dimensional data obtained from medical and industrial CT, MRI, etc.

Background Art

In the medical field, there have been a number of methods for reconfiguring a three-dimensional image from volume data obtained using an X-ray CT, MRI, etc. In these methods, the technology of generating an isosurface has been frequently used and discussed in the field of three-dimensional images. An isosurface is a surface having the equal values in the three-dimensional field, and is obtained as a set satisfying an equation (1) below using a three-dimensional function defined by Voxel data as F (x, y, z) and a constant C.

$$F (x, y, z) = C \qquad (1)$$

Using the above-mentioned isosurface, a high-resolution three-dimensional image has been obtained at a high speed. However, when an isosurface is generated, a large number of polygons are generated, thereby taking a long time in performing a CPU processing, consuming a large amount of memory resources, and making an interactive processing difficult. Therefore, there is a strong demand for an effective technology of compressing image data.

In the conventional data compressing methods, QEM (Quadric Error Metrics) is to find points which locally and substantially forms a surface. The GEM quickly solves an energy minimizing problem relating to an error between a high density original mesh and a simplified mesh using a quadratic evaluation function, and is more concretely to delete triangles by repeatedly removing edges. The QEM has been considered to be effective in speed. However, since the QEM deletes triangles based on the data generated on an isosurface, there are limits of information held by the QEM. Therefore, since isosurface data is deleted within such limits, there is a possibility that a deleting processing deforms the original form.

Conventionally when a three-dimensional image is generated from three-dimensional image data (base data) measured by the CT and MRI, a part of data is deleted to reduce the memory usage as well as to shorten the processing time. However, the conventional data compressing methods have the problem that some degradation of an original image is inevitable when three-dimensional image data is generated within a reasonable processing time.

Furthermore, in the QEM, triangles are deleted with each edge sequentially deleted. In the case of isosurface data including a large number of very small triangles, there has been the problem of a long processing time.

It is an object of the present invention to provide an image data compressing method and an image processing apparatus which can generate correct isosurface data at a high speed with an amount of reduced data from a three-dimensional data obtained by the medical and industrial CT and MRI.

Disclosure of Invention

The image data compressing method and the image processing apparatus according to the present invention are as follows.

An image data compressing method according to the present invention is for deleting an isosurface of a triangle generated based on a three-dimensioned data. The method comprises retrieving a triangle sequentially in an ascending order of size from a generated plurality of isosurfaces, determining whether or not an error occurring in a case that the retrieved triangle is deleted is within a tolerance using a representative point of the retrieved triangle, deleting the retrieved triangle and deleting or changing adjacent related triangles in a case that the error is within the tolerance, and retrieving a next triangle in the ascending order of size to repeatedly perform the above processing without deleting the retrieved triangle in a case that the error is beyond tolerance.

Preferably in the image data compressing method according to the present invention, triangles are retrieved in an ascending order of area or in an ascending order of length and narrowness.

Also preferably in the image data compressing method according to the present invention, the error occurring in a case that the retrieved triangle is deleted is determined based on a base data used in generation of the plurality of isosurfaces.

Also preferably in the image data compressing method according to the present invention, the error occurring in a case that the retrieved triangle is deleted is determined whether or not obtained coordinates are within tolerance. The obtained coordinates is obtained, using a point of barycenter of the retrieved triangle as its representative point, by retrieving a cubic grating including the coordinates of the point of barycenter from the base data and interpolating a central position of the retrieved cubic grating.

Also preferably in the image data compressing method according to the present invention, a target deletion rate of the plurality of isosurfaces is set in advance, and the triangle deleting processing is repeated until the target deletion rate is reached.

An image processing apparatus for generating an isosurface of a triangle based on three-dimensional data. The apparatus comprises an isosurface deleting unit to retrieve a triangle sequentially in an ascending order of size from a generated plurality of isosurfaces, to determine whether or not an error occurring in a case that the retrieved triangle is deleted is within a tolerance using a representative point of the retrieved triangle, to delete the retrieved triangle and deleting or changing adjacent related triangles in a case that the error is within the tolerance, and to retrieve a next triangle in the ascending order of size to repeatedly perform the above processing without deleting the retrieved triangle in a case that the error is beyond tolerance.

Preferably in the image processing apparatus according to the present invention, triangles are retrieved in an ascending order of area or in an ascending order of length and narrowness.

Also preferably in the image processing apparatus according to the present invention, the error occurring in a case that the retrieved triangle is deleted is determined based on a base data used in generation of the plurality of isosurfaces.

Also preferably in the image processing apparatus according to the present invention, the error occurring in a case that the retrieved triangle is deleted is determined whether or not obtained coordinates are within tolerance. The obtained coordinates is obtained, using a point of barycenter of the retrieved triangle as its representative point, by retrieving a cubic grating including the coordinates of the point of barycenter from the base data and interpolating a central position of the retrieved cubic grating.

Also preferably in the image processing apparatus according to the present invention, a target deletion rate of the plurality of isosurfaces is set in advance, and the triangle deleting processing is repeated until the target deletion rate is reached.

Brief Description of Drawings

FIGS. 1A and 1B are explanatory views showing the principle of the isosurface deleting processing according to the present invention.

FIG. 2 shows the structure of an embodiment of an image processing apparatus according to the present invention.

FIG. 3 is a flowchart showing an embodiment of the isosurface deleting processing according to the present invention.

FIG. 4 is an explanatory view of a cubic grating including the coordinates of the representative point (*) of the triangle obtained based on the isosurface data.

FIG. 5 is an explanatory view showing the status of determining whether or not a deleting processing is to be performed by referring to a practical example.

FIG. 6 is an explanatory view showing the range of a triangle requiring deletion and change in a case that a triangle is deleted.

FIG. 7 is a graph showing a change in polygon deletion rate when a width which can be deleted is changed.

FIGS. 8A, 8B, and 8C show an example (1) of a result of an isosurface deletion experiment performed using the data of thighbone of a human being.

FIGS. 9A and 9B show an example (2) of a result of an isosurface deletion experiment performed using the data of thighbone of a human being.

FIGS. 10A, 10B, and 10C show an example (3) of a result of an isosurface deletion experiment performed using the data of thighbone of a human being.

Best Mode for Carrying Out the Invention

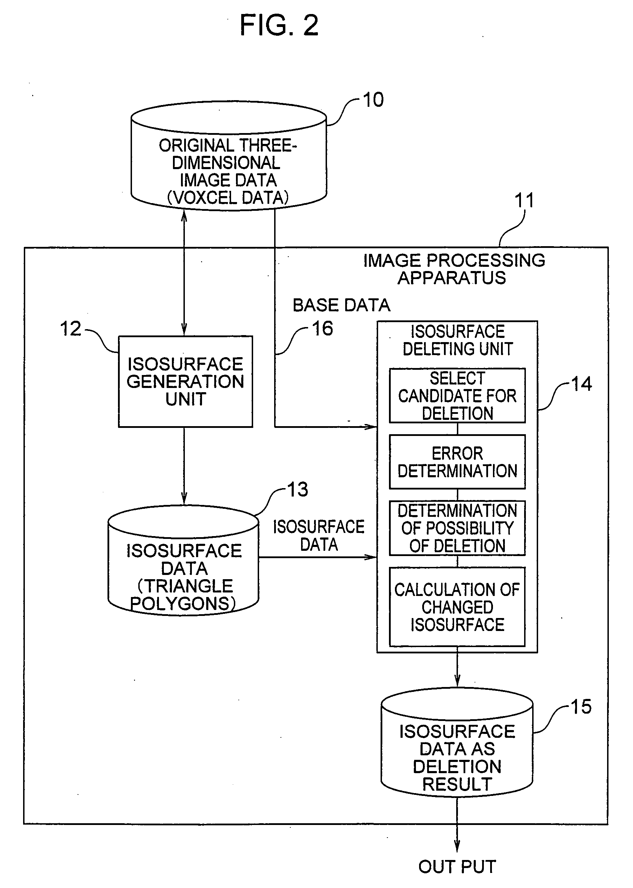

When an isosurface data contains a large number of small triangles, it is more effective to delete triangles than to delete edges as in the conventional QEM method. According to the present invention, triangles are sequentially selected in order from the smallest triangle and are deleted, thereby isosurfaces are effectively deleted. To suppress the image degradation by the deleting processing within a predetermined range, an error is evaluated based on a base data 16 (refer to FIG. 2) used in generation of the isosurface. That is, in the conventional method, deletion is performed based on the generated isosurface data. However, in the present invention, when an isosurface is deleted, an error is evaluated by referring to the base data 16 used in generation of an isosurface, and a constant after the deletion is obtained, thereby performing the deletion with deformation in form minimized. The base data 16 is a basic data (a three-dimensional image, a structure grating, a non-structure grating) required when an isosurface is generated.

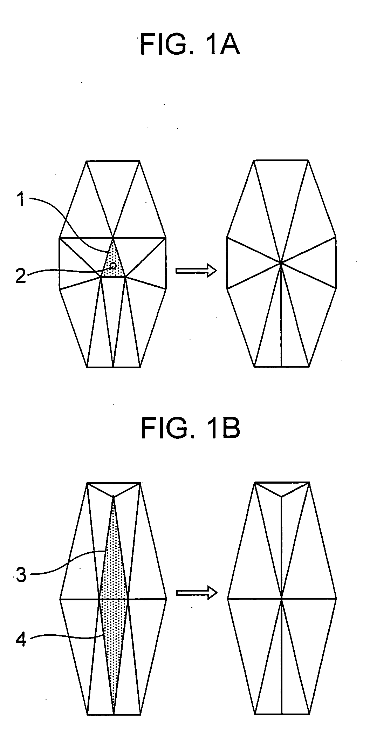

In the isosurface deleting processing, a predetermined width is set as a tolerance range from the median of the data, a representative point is obtained for a triangle which is a candidate for deletion sequentially selected from the smallest, an error is evaluated at the representative point, and the determination is made whether or not a triangle can be deleted, thereby obtaining the efficiency. In the deleting processing, the entire target deletion rate is given according to the number of triangles obtained by generating isosurfaces as an initial value. Then, the triangles are sequentially selected in order from the smallest in area, for example, or from the longest in height in the determination whether or not a triangle can be deleted, repeatedly performing the deleting processing until the target deletion rate can be obtained. A triangle is represented by a point or line when it is deleted, and a triangle adjacent to the deleted triangle is also deleted or transformed. By referring to FIG. 1, the principle of the isosurface deleting processing according to the present invention is practically explained below.

FIG. 1A shows a method for deleting a triangle which is small in area by representing it by a point. Numeral 1 shown in FIG. 1A denotes the smallest triangle in area in the isosurface (polygon) shown in FIG. 1, and is first selected as a candidate for deletion. Numeral 2 denotes a representative point of the triangle 1, and, for example, a point of barycenter is used. The coordinates of the representative point 2 are converted into the corresponding coordinates of the base data 16, and an error generated in the deleting processing is evaluated. When the deletion is permitted, the triangle 1 is deleted, and represented by the representative point 2, and other three triangles whose sides are respectively adjacent with the three sides of the triangle 1 are simultaneously deleted. Another triangle whose vertexes are respectively adjacent with the three vertexes of the triangle 1 are expanded to the representative point 2 of the triangle 1. Since the maximum of four triangles can be simultaneously deleted, there is a possibility that the shapes of the remaining triangles can be greatly changed. Then, the information about the adjacent triangle is updated together with the deletion of the triangle.

FIG. 1B shows the method for deleting a triangle having a large height by representing it by a side. Numerals 3 and 4 shown in FIG. 1B denote examples of triangles having large heights. The triangle having a large height is selected based on the difference between the longest side and the next longest side of a triangle. The isosurface deleting processing is performed in order from the triangle having the largest difference between them. By referring to the triangle 3, the triangle 3 to be deleted can be a line by setting the length of the shortest side to zero. Therefore, another triangle 4 whose side is adjacent with the shortest side of the triangle 3 is simultaneously deleted, and the maximum of two triangles are simultaneously deleted. The concept of the initial value and the consecutive deleting processing are the same as those in the case of the triangle which is small in area as shown in FIG. 1A.

The isosurface deleting processing according to the present invention is performed based on the base data 16. In the isosurface generating processing, a plurality of isosurfaces (a plurality of triangle polygons) are generated based on the base data 16. When the base data 16 is used in deleting the isosurface, correct information can be obtained, thereby eliminating the error causing the image degradation in the conventional technology. By eliminating the error, a portion which can be deleted and other portions can be definitely separated. As a result, although a deletion is performed, isosurface data having a high-quality shape can be obtained.

The preferred embodiments of the present invention are explained below by referring to FIGS. 2 to 6.

FIG. 2 shows the structure of an embodiment of the image processing apparatus according to the present invention. In FIG. 2, Numeral 10 denotes an original three-dimensional image data in Voxcel data form obtained from the CT, MRI, etc. Numeral 11 denotes an image processing apparatus. Numeral 12 denotes an isosurface generation unit which generates a plurality of isosurfaces based on the three-dimensional original image data. Numeral 13 denotes generated isosurface data. Numeral 14 denotes an isosurface deleting unit which performs an isosurface deleting processing according to the present invention. Numeral 15 denotes isosurface data as deletion result. Numeral 16 denotes the base data which includes structure grating data, non-structure grating data, and three-dimensional image data, which are used in an isosurface deleting processing.

When any three-dimensional image display is performed based on the original three-dimensional image data 10, the isosurface generation unit 12 generates a three-dimensional structure grating and non-structure grating from Voxcel data by, for example, Marching Cubes, and generates isosurfaces, each of which is a triangle. The generated isosurface data 13 includes a large number of small triangles. When the amount of data of the isosurface data 13 is deleted, the isosurface deleting unit 14 is activated. The isosurface deleting unit 14 performs a deletion candidate selecting processing of sequentially retrieving small triangles to be deleted from the isosurface data 13, an error determining processing of evaluating based on the base data 16 an amount of error generated by the deletion of the retrieved triangles as the candidate of the deletion, a deletion possibility determining processing of determining whether or not the triangle can be deleted by evaluating whether or not the amount of error is within tolerance, and a changed isosurface calculating processing of calculating a change of an adjacent triangle generated by the deletion of the triangle, and outputs the isosurface data 15 as the deletion result.

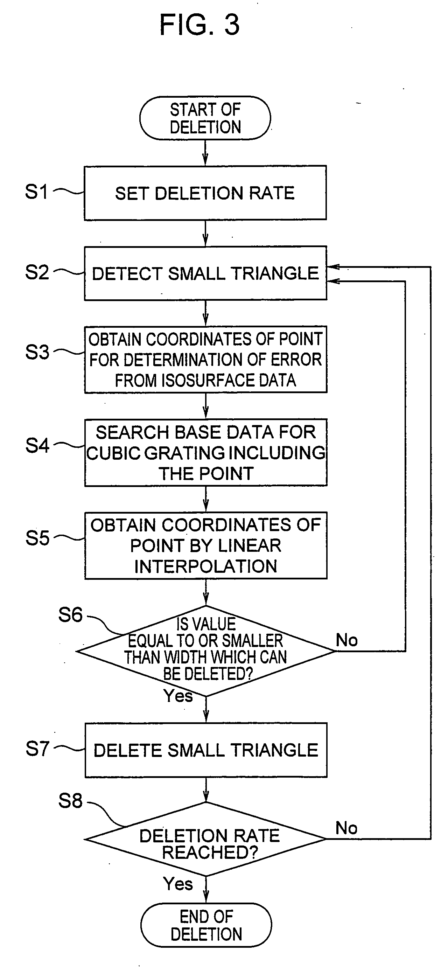

The isosurface deleting processing of the present invention is described by referring to the flowchart of an embodiment shown in FIG. 3. The contents of the processing in the steps (S1) to (S8) of the flowchart are sequentially explained. As an example of a small triangle, a triangle of a small area is used.

Step (S1) A deletion rate is set as an initial value. Since the number of triangles obtained in generation of isosurfaces depends on each image, the deleting processing is performed targeting on the deletion rate, not on the number of deleted triangles.

Step (S2) A small triangle is detected. As a small triangle, as shown in FIGS. 1A and 1B, a triangle is selected in order from the smallest in area or the triangle having the largest height.

Step (S3) For the selected triangle, the coordinates of the representative point for determination of error are obtained from the isosurface data. The representative point is a point of the barycenter of the triangle, for example.

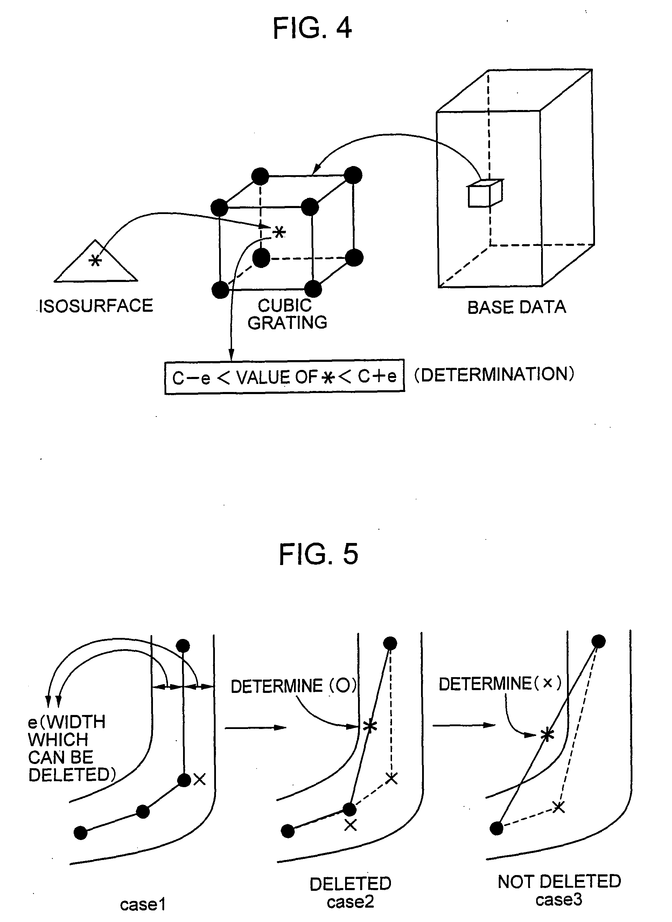

Step (S4) As shown in FIG. 4, the cubic grating including the coordinates of the representative point (*) of the triangle obtained by the isosurface data is detected from the structure grating of the base data 16.

Step (S5) The coordinates are linearly interpolated by the cubic grating retrieved from the base data 16. The base data 16 has only the value of integer coordinates (coordinates of the grating point of the cubic grating), so that there is a case that the calculated coordinates of the representative point (*) are not integer coordinates. In that case, the coordinates of the representative point are obtained by the linear interpolation on the cubic grating as shown in FIG. 4.

Step (6) It is determined whether or not a triangle can be deleted. In FIG. 4, symbol "C" denotes coordinates when an isosurface is generated, and symbol "e" denotes a width which can be deleted. A comparison is made to determine whether or not the coordinates of the representative point (*) are within the width which can be deleted. When the coordinates C are not within the width which can be deleted, the deletion of the triangle is not performed, and the processing is returned to step (S2), the next small triangle is detected, and the similar deleting processing is repeated.

Step (S7) When the coordinates of the representative point (*) are within the width which can be deleted, the triangle is deleted and made into a point. Simultaneously, the adjacent triangle is deleted or transformed, and the constant of each of the related triangles is calculated again.

Step (8) As a result of deleting triangles, it is determined whether or not the target deletion rate has been reached. When the target deletion rate is reached, the deleting processing is terminated. When it has not been reached, the processing is returned to step (S2), the next small triangle is detected, and the similar deleting processing is repeated.

FIG. 5 shows the status of the determination as to whether or not the deletion is to be performed by referring to a practical example. In case 1, the point marked with mark "x" is deleted. In case 2, the point * in a shape formed after the above deletion is determined using the base data 16. In this case, the determination point is within the width which can be deleted, so that it is determined there is a very small change in shape. And, the point marked with a small mark x is deleted. In case 3, the change in shape when a small mark x is deleted is similarly determined by the point of *. In this case, the determination point is out of the width which can be deleted, therefore a large change in shape may occur when deleting the point of mark x. And, the point of mark x is not deleted.

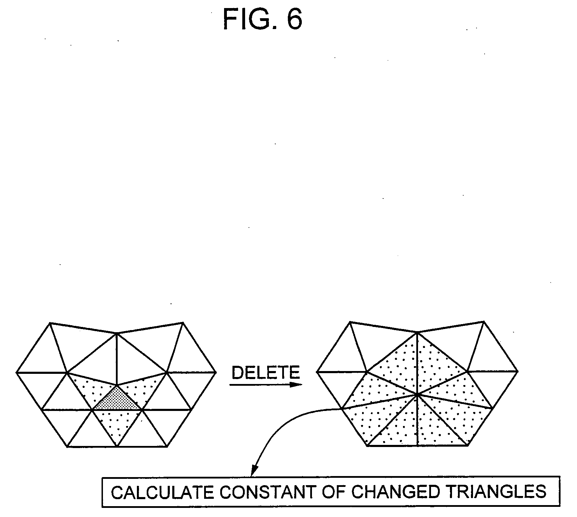

FIG. 6 shows the range of triangles to be deleted or changed when the triangle is deleted in step (S7). The central triangle in the left polygon shown in FIG. 6 is the triangle which is deleted, and the three dotted triangles adjacent with each of the sides are to be deleted correspondingly. The eight dotted triangles in the right polygon shown in FIG. 6 are triangles which require recalculation of their constant as a result of the deletion of the triangle.

As shown in FIG. 6, by deleting the small triangle, the positions and the shapes of the surrounding triangles are changed. The constant of the barycenter of the shape-changed triangle is different from the constant generated with an isosurface. When the constant is largely different, the deletion of a small triangle may largely change the shape. Therefore, by repeatedly deleting, the result is quite different from the original shape data. On the contrary, when the constant is not so different from the constant generated with an isosurface, the change in shape through the deletion of the triangle may be minimized. The base data 16 is used to obtain the above constant of the barycenter of the triangle. The base data 16 includes constants required in generating isosurfaces. However, since the base data 16 has only the value of the integer coordinates. Therefore, when the calculated coordinates are not integer coordinates, it is necessary to perform linear interpolation. Practically, since the calculation is made using grating space, the correct constants are obtained by using the constants of eight points including the point and by using the proportion of the distances from the eight points. When the value obtained by the linear interpolation is in the width which can be deleted from the constant generated with an isosurface, then the triangle whose barycenter is obtained is made into a point. On the other hand, when the value is out of the width which can be deleted, there is a possibility that the shape may be largely changed. Therefore, the processing of making the triangle into the point is not performed, and the processing of detecting the next small triangle is performed. Furthermore, to enhance the precision, the length of the side of a triangle is adopted as a reference, and the number of points to be use for determination of deletion is increased as the length of the side gets longer. The width which can be deleted is obtained by the equation (2). Symbol "e" in the equation (2) denotes a width which can be deleted. Symbol Cmax and Cmin denote the maximum and minimum values of the constant C, respectively. Symbol "x" denotes a rate. When a width which can be deleted of 5 % is requested, x = 0.05 is substituted.

$$e = ((Cmax)-(Cmin)) * x \qquad (2)$$

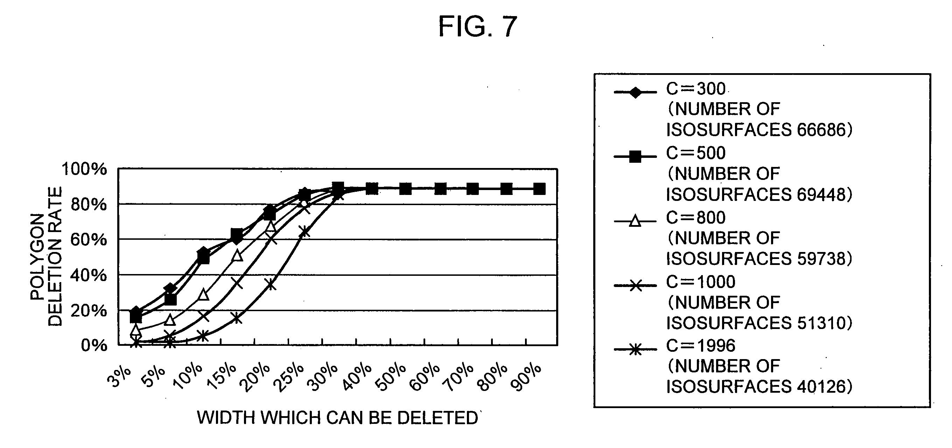

FIG. 7 shows the change in polygon deletion rate when the width which can be deleted is changed. The data is that of the thighbone of a human being named Fem128.vo1. FIG. 7 indicates the change in polygon deletion rate depending on the difference in width which can be deleted. The number of isosurfaces of the legend indicates the number of isosurfaces in the standard status in which no deleting processing is performed. For example, C = 1996 means the central value of C with the data.

When the width which can be deleted is small, the number of triangles which are deleted is fewer. It ca be seen that the larger the width which can be deleted, the larger the deletion rate, correspondingly. It is necessary to correctly recognize the width which can be deleted according to the data.

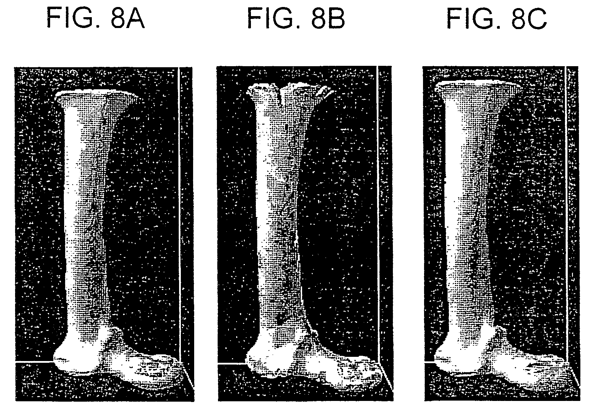

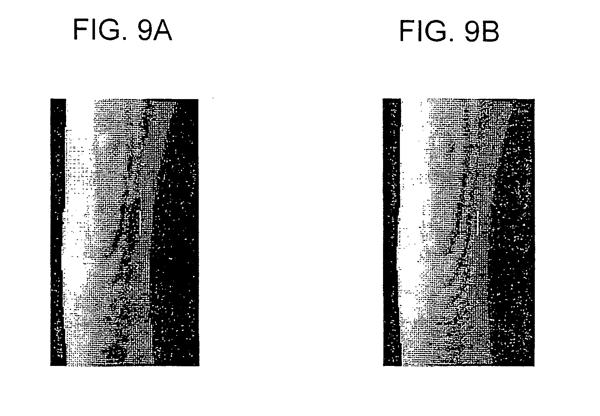

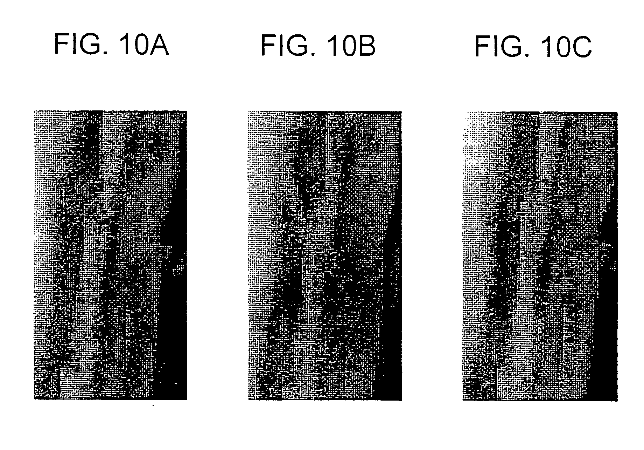

FIGS. 8 to 10 show examples of images as a result of an isosurface deletion experiment performed using the data of thighbone of a human being. FIG. 8 shows an example of C = 500. FIGS. 9 and 10 show examples of C = 300.

FIG. 8A shows a standard status when an isosurface is generated without performing the deleting processing, and the number of isosurfaces is 69448. FIG. 8B shows a result when the deleting processing is performed with the condition where the polygon deletion rate is 90 %, so that the number of isosurfaces is 7605. FIG. 8C shows a result when the deleting processing is performed with the condition where the polygon deletion rate is 90 % and the width which can be deleted is 5 %, so that the number of isosurfaces is 52085. FIG. 9A shows a result when small triangles are deleted at random with the condition where the polygon deletion rate is 30 %, so that the number of isosurfaces is 46698. FIG. 9B shows a result when small triangles are deleted with the condition where the polygon deletion rate is 30 % and the width which can be deleted is 5 %, so that the number of isosurfaces is 46926. FIG. 10A shows an image in the standard state. FIG. 10B shows an image of a result when small triangles are deleted by 30 % at random. FIG. 10C shows an image of a result when small triangles are deleted by 30 % at random using the width which can be deleted of 5 %. The result using the width which can be deleted indicates the correct deletion without losing the finest streak.

Industrial Applicability

According to the present invention, small triangles are selected and deleted from the isosurface data based on the three-dimensional data obtained with the medical and industrial CT and MRI, carefully checking not to generate a problem of precision after the deletion using the original three-dimensional data, according to deletion rate which is set arbitrary. As a result, isosurface data can be generated with the best precision corresponding to the arbitrary deletion of the amount of data. Therefore, in the three-dimensional image processing, a correct image can be quickly generated and processed using an isosurface of a smaller amount of data as necessary.

**Claims**

1. An image data compressing method for deleting an isosurface of a triangle generated based on a three-dimensioned data, the method comprising:

retrieving a triangle sequentially in an ascending order of size from a generated plurality of isosurfaces;
determining whether or not an error occurring in a case that the retrieved triangle is deleted is within a tolerance using a representative point of the retrieved triangle;
deleting the retrieved triangle and deleting or changing adjacent related triangles in a case that the error is within the tolerance; and
retrieving a next triangle in the ascending order of size to repeatedly perform the above processing without deleting the retrieved triangle in a case that the error is beyond tolerance.

2. The image data compressing method according to claim 1, wherein triangles are retrieved in an ascending order of area or in an ascending order of length and narrowness.

3. The image data compressing method according to claim 1 or 2, wherein the error occurring in a case that the retrieved triangle is deleted is determined based on a base data used in generation of the plurality of isosurfaces.

4. The image data compressing method according to claim 3, wherein the error occurring in a case that the retrieved triangle is deleted is determined whether or not obtained coordinates are within tolerance, the obtained coordinates being obtained, using a point of barycenter of the retrieved triangle as its representative point, by retrieving a cubic grating including the coordinates of the point of barycenter from the base data and interpolating a central position of the retrieved cubic grating.

5. The image data compressing method according to any of claims 1 to 4, wherein a target deletion rate of the plurality of isosurfaces is set in advance, and the triangle deleting processing is repeated until the target deletion rate is reached.

6. A three-dimensional image processing apparatus for generating an isosurface of a triangle based on three-dimensional data, the apparatus comprising:

an isosurface deleting unit to retrieve a triangle sequentially in an ascending order of size from a generated plurality of isosurfaces, to determine whether or not an error occurring in a case that the retrieved triangle is deleted is within a tolerance using a representative point of the retrieved triangle, to delete the retrieved triangle and deleting or changing adjacent related triangles in a case that the error is within the tolerance, and to retrieve a next triangle in the ascending order of size to repeatedly perform the above processing without deleting the retrieved triangle in a case that the error is beyond tolerance.

7. The three-dimensional image processing apparatus according to claim 6, wherein triangles are retrieved in an ascending order of area or in an ascending order of length and narrowness.

8. The three-dimensional image processing apparatus according to claim 6 or 7, wherein the error occurring in a case that the retrieved triangle is deleted is determined based on a base data used in generation of the plurality of isosurfaces.

9. The three-dimensional image processing apparatus according to claim 8, wherein the error occurring in a case that the retrieved triangle is deleted is determined whether or not obtained coordinates are within tolerance, the obtained coordinates being obtained, using a point of barycenter of the retrieved triangle as its representative point, by retrieving a cubic grating including the coordinates of the point of barycenter from the base data and interpolating a central position of the retrieved cubic grating.

10. The three-dimensional image processing apparatus according to any of claims 6 to 9, wherein a target deletion rate of the plurality of isosurfaces is set in advance, and the triangle deleting processing is repeated until the target deletion rate is reached.

# FIG. 1A

# FIG. 1B

# FIG. 2

ORIGINAL THREE-
DIMENSIONAL
IMAGE DATA
(VOXCEL DATA) ~10

IMAGE PROCESSING
APPARATUS ~11

BASE DATA
~16

ISOSURFACE
GENERATION
UNIT ~12

ISOSURFACE
DELETING UNIT

SELECT
CANDIDATE FOR
DELETION ~14

ERROR
DETERMINATION

DETERMINATION
OF POSSIBILITY
OF DELETION

CALCULATION OF
CHANGED
ISOSURFACE

ISOSURFACE
DATA
(TRIANGLE
POLYGONS) ~13

ISOSURFACE
DATA

ISOSURFACE
DATA AS
DELETION
RESULT ~15

OUT PUT

# FIG. 3

```
        ┌─────────────────┐
        │   START OF      │
        │   DELETION      │
        └────────┬────────┘
                 │
                 ▼
S1 ──  ┌─────────────────────┐
       │  SET DELETION RATE  │
       └──────────┬──────────┘
                  │
                  ▼
S2 ──  ┌─────────────────────┐ ◄────────┐
       │ DETECT SMALL TRIANGLE│ ◄──────┐ │
       └──────────┬──────────┘         │ │
                  │                     │ │
                  ▼                     │ │
S3 ──  ┌──────────────────────────┐    │ │
       │ OBTAIN COORDINATES OF POINT│   │ │
       │ FOR DETERMINATION OF ERROR │   │ │
       │   FROM ISOSURFACE DATA     │   │ │
       └──────────┬───────────────┘    │ │
                  │                     │ │
                  ▼                     │ │
S4 ──  ┌──────────────────────────┐    │ │
       │   SEARCH BASE DATA FOR    │    │ │
       │ CUBIC GRATING INCLUDING   │    │ │
       │        THE POINT          │    │ │
       └──────────┬───────────────┘    │ │
                  │                     │ │
                  ▼                     │ │
S5 ──  ┌──────────────────────────┐    │ │
       │   OBTAIN COORDINATES OF   │    │ │
       │    POINT BY LINEAR        │    │ │
       │     INTERPOLATION         │    │ │
       └──────────┬───────────────┘    │ │
                  │                     │ │
                  ▼                     │ │
S6 ──     ◇ IS VALUE EQUAL TO      No   │ │
          ◇ OR SMALLER THAN     ──────────┘
          ◇ WIDTH WHICH CAN         │ │
          ◇ BE DELETED? ◇           │ │
                  │ Yes             │
                  ▼                 │
S7 ──  ┌─────────────────────┐      │
       │ DELETE SMALL TRIANGLE│     │
       └──────────┬──────────┘      │
                  │                 │
                  ▼                 │
S8 ──     ◇ DELETION RATE ◇   No    │
          ◇  REACHED?    ◇ ─────────┘
                  │ Yes
                  ▼
        ┌─────────────────┐
        │   END OF        │
        │   DELETION      │
        └─────────────────┘
```

# FIG. 4

ISOSURFACE

CUBIC
GRATING

BASE DATA

$C-e <$ VALUE OF $* < C+e$ (DETERMINATION)

# FIG. 5

e(WIDTH
WHICH
CAN BE
DELETED)

case1

DETERMINE (O)

DELETED
case2

DETERMINE (×)

NOT DELETED
case3

# FIG. 6

DELETE

CALCULATE CONSTANT OF CHANGED TRIANGLES

FIG. 7

FIG. 8A  FIG. 8B  FIG. 8C

FIG. 9A

FIG. 9B

FIG. 10A

FIG. 10B

FIG. 10C

## INTERNATIONAL SEARCH REPORT

| International application No. |
|---|
| PCT/JP03/05427 |

**A. CLASSIFICATION OF SUBJECT MATTER**
Int.Cl⁷ G06T17/40, G06T15/00, A61B5/00, A61B5/05, A61B6/03

According to International Patent Classification (IPC) or to both national classification and IPC

**B. FIELDS SEARCHED**

Minimum documentation searched (classification system followed by classification symbols)
Int.Cl⁷ G06T17/40, G06T15/00, A61B5/00, A61B5/05, A61B6/03

Documentation searched other than minimum documentation to the extent that such documents are included in the fields searched
| | | | |
|---|---|---|---|
| Jitsuyo Shinan Koho | 1922–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | EP 1113400 A2 (MINOLTA CO., LTD.), 04 July, 2001 (04.07.01), Full text; Figs. 1 to 15 & US 2002/0003539 A1 & JP 2001-184528 A & JP 2001-183118 A | 1-10 |
| A | JP 2002-535791 A (Enbaya Inc.), 22 October, 2002 (22.10.02), Full text; Figs. 1 to 7 & WO 00/45237 A2 | 1-10 |
| A | Takashi KANAI, "3D Digital Contents no tame no Modeling Gijutsu/Hyoji·Henshu·Asshuku no tame no Taju Kaizodo Hyogen Gijutsu", Joho Shori, Information Processing Society of Japan, 15 October, 2000 (15.10.00), Vol.41, No.10, pages 1108 to 1112 | 1-10 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 May, 2003 (19.05.03) | 03 June, 2003 (03.06.03) |

| Name and mailing address of the ISA/ Japanese Patent Office | Authorized officer |
|---|---|
| Facsimile No. | Telephone No. |

Form PCT/ISA/210 (second sheet) (July 1998)

**EP 1 510 974 A1**

<table>
<tr><td colspan="2">INTERNATIONAL SEARCH REPORT</td><td>International application No.<br>PCT/JP03/05427</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| A | Hiromasa SUZUKI, "3D Digital Contents no tame no Modeling Gijutsu/3jigen Mesh Model no Seisei to Hyogen", Joho Shori, Information Processing Society of Japan, 15 October, 2000 (15.10.00), Vol.41, No.10, pages 1102 to 1107 | 1-10 |

Form PCT/ISA/210 (continuation of second sheet) (July 1998)